# EUROPÄISCHE PATENTSCHRIFT

(11) **EP 2 753 042 B1**
(45) Veröffentlichungstag und Bekanntmachung des Hinweises auf die Patenterteilung: **09.08.2017**
(21) Anmeldenummer: 13198747.1
(22) Anmeldetag: 20.12.2013
(51) Int. Cl.: H04L 29/06

(54) **Authentifizierung von mindestens zwei über einen Datenbus gekoppelten, landwirtschaftlichen Geräten**
Authenticating at least two Agricultural Devices Coupled via a Data Bus
Authentification d'au moins deux engins agricoles couplés par un bus de données

(30) Priorität: 08.01.2013 DE 102013000088
(43) Veröffentlichungstag der Anmeldung: 09.07.2014
(73) Patentinhaber: CLAAS E-Systems KGaA mbH & Co KG, 33330 Gütersloh (DE)
(72) Erfinder: Jeninga, Jasper, 88214 Ravensburg (DE); Mock, Andreas, 88284 Wolpertswende (DE); Dirlewanger, Florian, 88348 Bad Saulgau (DE)
(74) Vertreter: Budach, Steffen

(56) Entgegenhaltungen:
- EP-A1- 1 990 753
- EP-A2- 1 312 492
- EP-A2- 2 154 864
- US-A1- 2008 303 648

## Beschreibung

Die Erfindung betrifft ein Verfahren zur Authentifizierung von mindestens zwei über einen Datenbus gekoppelten, landwirtschaftlichen Geräten. Des Weiteren betrifft die Erfindung eine Authentifizierungsvorrichtung zur Durchführung des Verfahrens.

Zur Durchführung bestimmter landwirtschaftlicher Arbeiten ist es erforderlich, mindestens zwei landwirtschaftliche Geräte mechanisch und/oder hydraulisch und/oder pneumatisch und/oder elektrisch zu koppeln. So kann es zur Ausführung von Erntearbeiten erforderlich sein, ein als Traktor ausgebildetes, erstes landwirtschaftliches Gerät mit einem als Erntemaschine ausgebildeten, zweiten landwirtschaftlichen Gerät zu koppeln. Dabei wird die Erntemaschine mit Hilfe des Traktors fortbewegt, wobei der Traktor mechanische Leistung und/oder hydraulische Leistung und/oder pneumatische Leistung und/oder elektrische Leistung zum Betrieb der Erntemaschine bereitstellt. Moderne landwirtschaftliche Geräte sind ferner steuerungsseitig zum Austausch steuerungsseitiger Daten koppelbar, nämlich über einen Datenbus. Hierbei kann z.B. vorgesehen sein, dass eine Erntemaschine den Betrieb des Traktors beeinflusst, zum Beispiel dadurch, dass die Erntemaschine vom Traktor mehr Leistung anfordert und/oder die Bewegungsrichtung des Traktors beeinflusst. Hierbei muss sichergestellt werden, dass eine Beeinflussung des Betriebs des Traktors durch die Erntemaschine zu keinen unsicheren Betriebszuständen am Traktor führt. Auch darf der Traktor keine unsicheren Betriebszustände an der Erntemaschine verursachen. Daher sollen nur entsprechend zugelassene bzw. zertifizierte landwirtschaftliche Geräte steuerungsseitig aneinander koppelbar sein. Dies kann über eine Authentifizierung der über den Datenbus gekoppelten, landwirtschaftlichen Geräte erfolgen.

Aus der Praxis ist es bekannt, eine Authentifizierung von über einen Datenbus gekoppelten, landwirtschaftlichen Geräten dadurch vorzunehmen, dass vom Betreiber der landwirtschaftlichen Geräte Authentifizierungscodes über das Internet oder über Mobilfunk abgerufen und/oder eingegeben werden. Nach diesen Verfahren sind betreiberseitige Eingaben erforderlich, wodurch die Authentifizierung fehleranfällig ist. Teilweise ist im Feld auch kein Internetzugriff oder Mobilfunkzugriff gegeben, so dass dann keine Authentifizierung möglich ist.

EP 1 990 753 A1 betrifft ein Kraftfahrzeugsteuergerätedatenübertragungssystem und offenbart ein System und Verfahren zur Übertragung manipulationsgefährdeter Daten von einer zentralen Datenverarbeitungsvorrichtung bei einem Kraftfahrzeughersteller an eine Kaftfahrzeugdatenverarbeitungsvorrichtung, wie einem elektronischen Antriebsmotorregelgerät, wobei eine manipulationsfreie Datenübertragung gewährleistet wird. Dabei wird ein Authentisierungsanfragewert von der Kraftfahrzeugdatenverarbeitungsvorrichtung erzeugt und mittels eines mobilen Datenverarbeitungsgeräts auf die zentrale Datenverarbeitungsvorrichtung übertragen, wobei diese einen Authentisierungserwiderungswert erstellt, der gemeinsam mit Freischaltdaten auf gleichem Weg zurück übertragen wird.

Aus US 2008/0303648 A1 ist ein Verfahren zur Kommunikation zwischen einem Traktor und Anhänger bekannt, wobei zunächst über eine Kabelverbindung Authentifizierungsinformationen für eine drahtlose Kommunikation zwischen Traktor und Anhänger übermittelt werden und danach eine gesicherte drahtlose Kommunikationsverbindung zwischen dem Traktor und Anhänger hergestellt wird.

Hiervon ausgehend liegt der vorliegenden Erfindung die Aufgabe zu Grunde ein neuartiges Verfahren zur Authentifizierung von mindestens zwei über einen Datenbus gekoppelten, landwirtschaftlichen Geräten sowie eine Authentifizierungsvorrichtung zur Durchführung des Verfahrens zu schaffen.

Diese Aufgabe wird durch ein Authentifizierungsverfahren gemäß Patentanspruch 1 gelöst.

Erfindungsgemäß erfolgt die Authentifizierung von mindestens zwei über einen Datenbus gekoppelten, landwirtschaftlichen Geräten mit folgenden Schritten: jedes der an den Datenbus gekoppelten, landwirtschaftlichen Geräte wird über eine ebenfalls an den Datenbus gekoppelte Authentifizierungsvorrichtung automatisch und unabhängig von dem oder jedem anderen landwirtschaftlichen Gerät einer Authentifizierung unterzogen; anschließend wird ein unmittelbarer Datenaustausch oder mittelbarer Datenaustausch zwischen den erfolgreich authentifizierten, landwirtschaftlichen Geräten automatisch zugelassen, wohingegen ein Datenaustausch mit einem nicht erfolgreich authentifizierten, landwirtschaftlichen Gerät automatisch nicht zugelassen wird. Das erfindungsgemäße Authentifizierungsverfahren erfolgt vollständig automatisch und erfordert keine betreiberseitigen Eingaben. Es ist kein Internetzugriff oder Mobilfunkzugriff erforderlich.

Nach einer vorteilhaften Weiterbildung der Erfindung wird zur Authentifizierung jedes an den Datenbus gekoppelten, landwirtschaftlichen Geräts einerseits über das jeweilige landwirtschaftliche Gerät die Authentifizierungsvorrichtung und andererseits über die Authentifizierungsvorrichtung das jeweilige landwirtschaftliche Gerät verifiziert. Eine solche Authentifizierung erfolgt vollständig automatisch und ist abhörsicher.

Vorzugsweise erfolgt die Verifikation der Authentifizierungsvorrichtung über das jeweilige landwirtschaftliche Gerät in folgenden Schritten: das jeweilige landwirtschaftliche Gerät übermittelt eine in einer Steuerungseinrichtung desselben gespeicherte Identifikationsnummer und eine von der Steuerungseinrichtung desselben ermittelte Zufallszahl an die Authentifizierungsvorrichtung; die Authentifizierungsvorrichtung ermittelt aus der von dem jeweiligen landwirtschaftlichen Gerät übermittelten Identifikationsnummer einen ersten Geräteschlüssel; die Authentifizierungsvorrichtung ermittelt aus dem ersten Geräteschlüssel und der von dem jeweiligen landwirtschaftlichen Gerät übermittelten Zufallszahl einen zweiten Geräteschlüssel; die Authentifizierungsvorrichtung übermittelt den zweiten Geräteschlüssel und eine von der Authentifizierungsvorrichtung ermittelte Zufallszahl an die Steuerungseinrichtung des jeweiligen landwirtschaftlichen Geräts; das jeweilige landwirtschaftliche Gerät ermittelt aus einem in der Steuerungseinrichtung desselben gespeicherten ersten Geräteschlüssel und der von derselben ermittelten Zufallszahl ebenfalls einen zweiten Geräteschlüssel und vergleicht diesen von derselben ermittelten zweiten Geräteschlüssel mit dem von der Authentifizierungsvorrichtung ermittelten und übermittelten zweiten Geräteschlüssel. Dann, wenn diese beiden zweiten Geräteschlüssel übereinstimmen, ist die Authentifizierungsvorrichtung über das jeweilige landwirtschaftliche Gerät erfolgreich verifiziert worden.

Vorzugsweise erfolgt die Verifikation des jeweiligen landwirtschaftlichen Geräts über die Authentifizierungsvorrichtung in folgenden Schritten: das jeweilige landwirtschaftliche Gerät ermittelt aus dem in der Steuerungseinrichtung desselben gespeicherten ersten Geräteschlüssel und der von der Authentifizierungsvorrichtung übermittelten Zufallszahl einen dritten Geräteschlüssel und übermittelt denselben an die Authentifizierungsvorrichtung; die Authentifizierungsvorrichtung ermittelt aus dem von derselben ermittelten ersten Geräteschlüssel und aus der von derselben ermittelten Zufallszahl ebenfalls einen dritten Geräteschlüssel ermittelt und vergleicht diesen mit dem vom jeweiligen landwirtschaftlichen Gerät ermittelten und übermittelten dritten Geräteschlüssel. Dann, wenn die beiden dritten Geräteschlüssel übereinstimmen, ist das jeweilige landwirtschaftliche Gerät über die Authentifizierungsvorrichtung erfolgreich verifiziert worden.

Sowohl bei der obigen Verifizierung der Authentifizierungsvorrichtung als auch bei der obigen Verifizierung des jeweiligen landwirtschaftlichen Geräts werden keine geheimen Geräteschlüssel des jeweiligen landwirtschaftlichen Geräts übertragen, sondern ausschließlich Zufallszahlen und abhängig von Zufallszahlen nichtreversibel ermittelte Geräteschlüssel. Das erfindungsgemäße Authentifizierungsverfahren ist daher abhörsicher.

Nach erfolgreicher Verifikation der Authentifizierungsvorrichtung und des jeweiligen landwirtschaftlichen Geräts ist das jeweilige landwirtschaftliche Gerät erfolgreich authentifiziert. Anschließend wird ein unmittelbarer Datenaustausch oder mittelbarer Datenaustausch zwischen den erfolgreich authentifizierten, landwirtschaftlichen Geräten automatisch zugelassen. Ein mittelbarer Datenaustausch zwischen erfolgreich authentifizierten, landwirtschaftlichen Geräten wird über die Authentifizierungsvorrichtung durchgeführt. Ein unmittelbarer Datenaustausch zwischen erfolgreich authentifizierten, landwirtschaftlichen Geräten wird unter Umgehung der Authentifizierungsvorrichtung durchgeführt, nämlich über hierzu ermittelte Kombinationsschlüssel.

Die erfindungsgemäße Authentifizierungsvorrichtung ist in Anspruch 9 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine erste schematisierte Darstellung zweier über einen Datenbus gekoppelter, landwirtschaftlicher Geräte zur Verdeutlichung einer ersten Variante der Erfindung;
- Fig. 2: eine zweite schematisierte Darstellung zweier über einen Datenbus gekoppelter, landwirtschaftlicher Geräte zur Verdeutlichung einer zweiten Variante der Erfindung;
- Fig. 3: ein Signalflussdiagramm zur Verdeutlichung der Authentifizierung der über den Datenbus gekoppelten, landwirtschaftlichen Geräte; und
- Fig. 4: ein Signalflussdiagramm zur Verdeutlichung der Ermittlung von Kombinationsschlüsseln zur Verwendung derselben bei einem unmittelbaren Datenaustausch zwischen erfolgreich authentifizierten, landwirtschaftlichen Geräten.

Die Erfindung betrifft ein Verfahren zur Authentifizierung von mindestens zwei über einen Datenbus gekoppelten, landwirtschaftlichen Geräten. Des Weiteren betrifft die Erfindung eine Authentifizierungsvorrichtung zur Durchführung des Verfahrens.

Nachfolgend wird die Erfindung für eine Anwendung beschreiben, in welcher ein als Traktor ausgebildetes, erstes landwirtschaftliches Gerät 10 eines ersten Herstellers mit einem als Erntemaschine ausgebildeten, zweiten landwirtschaftlichen Gerät 11 eines anderen, zweiten Herstellers über einen Datenbus 13 steuerungsseitig zu koppeln ist.

Die Erfindung ist jedoch nicht auf diese Anwendung beschränkt. Vielmehr kann die Erfindung immer dann zum Einsatz kommen, wenn zwei landwirtschaftliche Geräte typischerweise unterschiedlicher Hersteller zu koppeln sind.

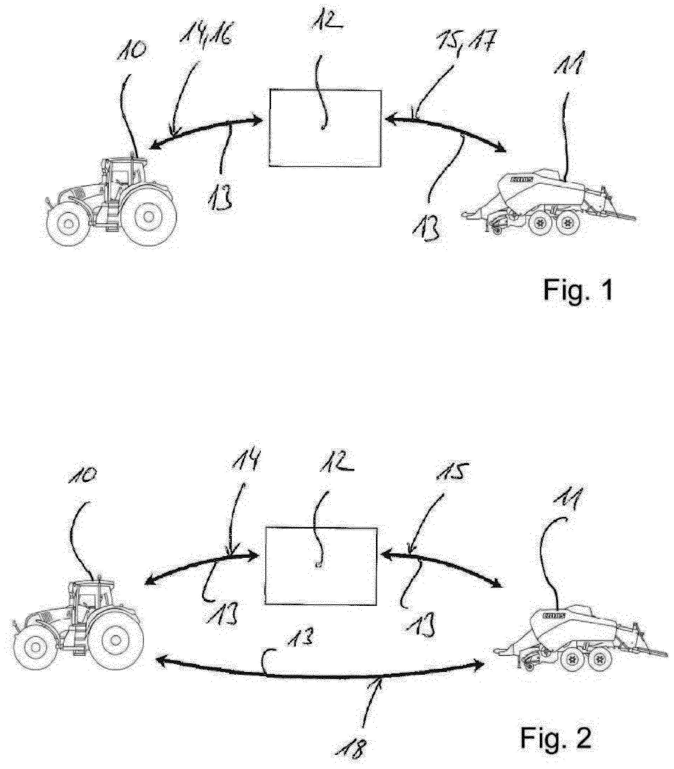

Die Authentifizierung der beiden landwirtschaftlichen Geräte 10 und 11, also des Traktors 10 und der Erntemaschine 11, erfolgt in folgenden Schritten: zunächst wird jedes der an den Datenbus 13 gekoppelten, landwirtschaftlichen Geräte 10, 11 über eine ebenfalls an den Datenbus 13 gekoppelte Authentifizierungsvorrichtung 12 automatisch und unabhängig von dem oder jedem anderen landwirtschaftlichen Gerät 10, 11 einer Authentifizierung 14, 15 unterzogen. Anschließend wird ein mittelbarer Datenaustausch 16, 17 (siehe Fig. 1) oder ein unmittelbarer Datenaustausch 18 (siehe Fig. 2) zwischen den erfolgreich authentifizierten, landwirtschaftlichen Geräten 10, 11 automatisch zugelassen, wohingegen ein Datenaustausch mit einem nicht erfolgreich authentifizierten, landwirtschaftlichen Gerät 10, 11 automatisch nicht zugelassen wird.

Mit Hilfe der Erfindung wird vollautomatisch ohne die Notwendigkeit betreiberseitiger Eingaben und ohne die Notwendigkeit eines Internetzugriffs oder Mobilfunkzugriffs sichergestellt, dass ausschließlich zugelassene bzw. zertifizierte landwirtschaftliche Geräte steuerungsseitig aneinander koppelbar sind. Hierdurch kann vollautomatisch gewährleistet werden, dass ausschließlich zugelassene bzw. zertifizierte landwirtschaftliche Geräte in Kombination miteinander betrieben werden und sich im Betrieb gegenseitig beeinflussen.

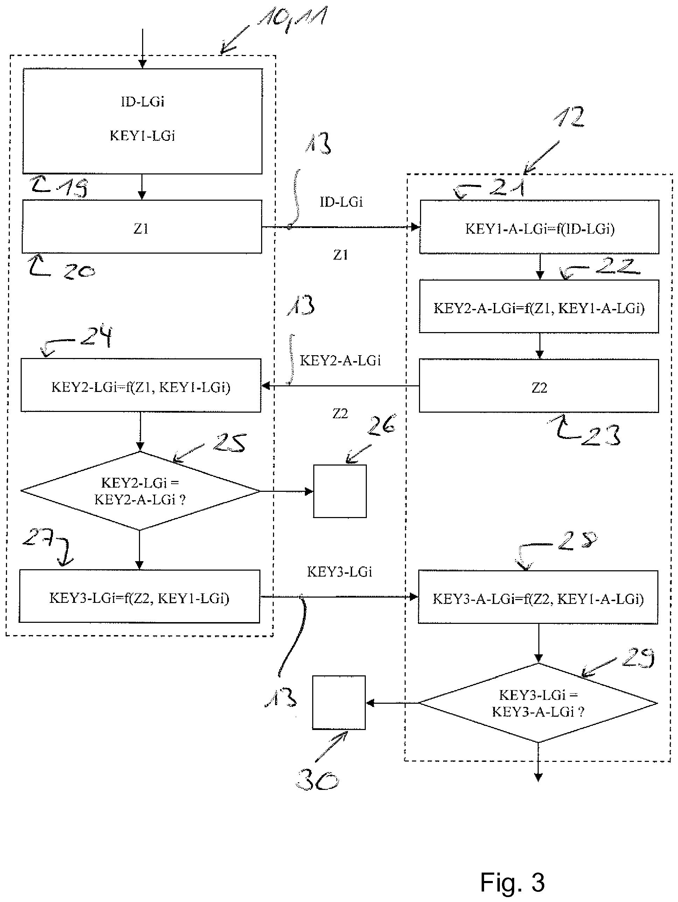

Zur Authentifizierung jedes an den Datenbus 13 gekoppelten, landwirtschaftlichen Geräts 10, 11 wird einerseits über das jeweilige landwirtschaftliche Gerät 10, 11 die Authentifizierungsvorrichtung 12 und andererseits über die Authentifizierungsvorrichtung 12 das jeweilige landwirtschaftliche Gerät 10, 11 verifiziert. Dies wird nachfolgend unter Bezugnahme auf Fig. 3 im Detail beschrieben.

Ein Block 19 visualisiert, dass in dem jeweiligen landwirtschaftlichen Gerät 10, 11, nämlich in einer Steuerungseinrichtung desselben, eine Identifikationsnummer ID-LGi (i=10, 11) des jeweiligen landwirtschaftlichen Geräts und ein geheimer, erster Geräteschlüssel KEY-LGi gespeichert sind. Gemäß einem Block 20 ermittelt das jeweilige landwirtschaftliche Gerät, nämlich die Steuerungseinrichtung, eine Zufallszahl Z1. Das jeweilige landwirtschaftliche Gerät übermittelt die in der Steuerungseinrichtung desselben gespeicherte Identifikationsnummer ID-LGi und die von der desselben ermittelte Zufallszahl Z1 über den Datenbus 13 an die Authentifizierungsvorrichtung 12. Der geheime, erste Geräteschlüssel KEY-LGi des jeweiligen landwirtschaftlichen Geräts wird hierbei nicht übertragen. Gemäß einem Block 21 ermittelt die Authentifizierungsvorrichtung 12 aus der von dem jeweiligen landwirtschaftlichen Gerät übermittelten Identifikationsnummer ID-LGi einen ersten Geräteschlüssel KEY1-A-LGi, und zwar mit Hilfe eines in der Authentifizierungsvorrichtung 12 implementierten Schlüsselgenerators. Die Authentifizierungsvorrichtung 12 ermittelt gemäß dem Block 22 aus dem ersten Geräteschlüssel KEY1-A-LGi und der von dem jeweiligen landwirtschaftlichen Gerät übermittelten Zufallszahl Z1 einen zweiten Geräteschlüssel KEY2-A-LGi. Ferner ermittelt die Authentifizierungsvorrichtung 12 eine Zufallszahl Z2. Die Authentifizierungsvorrichtung 12 übermittelt den zweiten Geräteschlüssel KEY2-A-LGi und die von der Authentifizierungsvorrichtung 12 ermittelte Zufallszahl Z2 über den Datenbus 13 an die Steuerungseinrichtung des jeweiligen landwirtschaftlichen Geräts 10, 11. Das jeweilige landwirtschaftliche Gerät ermittelt gemäß dem Block 24 aus dem in der Steuerungseinrichtung desselben gespeicherten ersten, geheimen Geräteschlüssel KEY1-LGi und der von derselben ermittelten Zufallszahl Z1 ebenfalls einen zweiten Geräteschlüssel KEY2-LGi. In einem Block 25 vergleicht das jeweilige landwirtschaftliche Gerät die von derselben ermittelten zweiten Geräteschlüssel KEY2-LGi mit dem von der Authentifizierungsvorrichtung ermittelten und übermittelten zweiten Geräteschlüssel KEY2-A-LGi. Dann, wenn die beiden zweiten Geräteschlüssel KEY2-A-LGi und KEY2-LGi übereinstimmen, ist die Authentifizierungsvorrichtung 12 über das jeweilige landwirtschaftliche Gerät 10, 11 erfolgreich verifiziert worden und es wird auf Block 27 verzweigt. Dann hingegen, wenn die beiden zweiten Geräteschlüssel KEY2-A-LGi und KEY2-LGi nicht übereinstimmen, ist die Authentifizierungsvorrichtung 12 nicht erfolgreich verifiziert worden und es wird auf Block 26 verzweigt, wobei dann in Block 26 die Authentifizierung erfolglos beendet wird.

In Block 27 ermittelt das jeweilige landwirtschaftliche Gerät 10, 11 aus dem in der Steuerungseinrichtung desselben gespeicherten ersten Geräteschlüssel KEY1-LGi und der von der Authentifizierungsvorrichtung 12 übermittelten Zufallszahl Z2 einen dritten Geräteschlüssel KEY3-LGi. Das jeweilige landwirtschaftliche Gerät 10, 11 übermittelt diesen dritten Geräteschlüssel KEY3-LGi über den Datenbus 13 an die Authentifizierungsvorrichtung 12. In einem Block 28 ermittelt die Authentifizierungsvorrichtung 12 aus dem von derselben ermittelten ersten Geräteschlüssel KEY1-A-LGi und aus der von derselben ermittelten Zufallszahl Z2 ebenfalls einen dritten Geräteschlüssel KEY3-A-LGi. Gemäß einem Block 29 vergleicht die Authentifizierungsvorrichtung 12 den von derselben ermittelten dritten Geräteschlüssel KEY3-A-LGi mit dem vom jeweiligen landwirtschaftlichen Gerät ermittelten und übermittelten dritten Geräteschlüssel KEY3-LGi. Dann, wenn die beiden dritten Geräteschlüssel KEY3-A-LGi und KEY3-LGi übereinstimmen, ist das jeweilige landwirtschaftliche Gerät über die Authentifizierungsvorrichtung 12 erfolgreich verifiziert worden. Dann hingegen, wenn die beiden dritten Geräteschlüssel KEY3-A-LGi und KEY3-LGi nicht übereinstimmen, ist das jeweilige landwirtschaftliche Gerät nicht erfolgreich verifiziert worden und es wird auf Block 30 verzweigt, wobei dann in Block 30 die Authentifizierung erfolglos beendet wird.

In der bevorzugten Anwendung, in welcher ein als Traktor ausgebildetes, erstes landwirtschaftliches Gerät 10 und ein als Erntemaschine ausgebildetes, zweites landwirtschaftliches Gerät 11 zu koppeln sind, erfolgt die Authentifizierung von Traktor 10 und Erntemaschine 11 unabhängig voneinander vorzugsweise wie folgt:
Gemäß dem Block 19 sind in dem Traktor 10, nämlich in einer Steuerungseinrichtung desselben, eine Identifikationsnummer ID-LG10 des Traktors 10 und eine geheimer erster Geräteschlüssel KEY-LG10 des Traktors 10 gespeichert. Gemäß dem Block 20 ermittelt der Traktor 10 eine Zufallszahl Z1. Der Traktor 10 übermittelt die in der Steuerungseinrichtung desselben gespeicherte Identifikationsnummer ID-LG10 und die von der desselben ermittelte Zufallszahl Z1 über den Datenbus 13 an die Authentifizierungsvorrichtung 12. Der geheime erste Geräteschlüssel KEY-LG10 des Traktors 10 wird hierbei nicht übertragen.

Gemäß dem Block 21 ermittelt die Authentifizierungsvorrichtung 12 aus der von dem Traktor 10 übermittelten Identifikationsnummer ID-LG10 einen ersten Geräteschlüssel KEY1-A-LG10 des Traktors 10, und zwar mit Hilfe eines in der Authentifizierungsvorrichtung 12 implementierten Schlüsselgenerators. Die Authentifizierungsvorrichtung 12 ermittelt gemäß dem Block 22 aus dem ersten Geräteschlüssel KEY1-A-LG10 und der von dem Traktor 10 übermittelten Zufallszahl Z1 einen zweiten Geräteschlüssel KEY2-A-LG10 des Traktors 10. Ferner ermittelt die Authentifizierungsvorrichtung 12 eine Zufallszahl Z2. Die Authentifizierungsvorrichtung 12 übermittelt den zweiten Geräteschlüssel KEY2-A-LG10 und die von der Authentifizierungsvorrichtung 12 ermittelte Zufallszahl Z2 über den Datenbus 13 an die Steuerungseinrichtung des Traktors 10. Das Traktor 10 ermittelt gemäß dem Block 24 aus dem in der Steuerungseinrichtung desselben gespeicherten ersten, geheimen Geräteschlüssel KEY1-LG10 und der von derselben ermittelten Zufallszahl Z1 ebenfalls einen zweiten Geräteschlüssel KEY2-LG10 des Traktors 10. In einem Block 25 vergleicht der Traktor 10 die von derselben ermittelten zweiten Geräteschlüssel KEY2-LG10 mit dem von der Authentifizierungsvorrichtung 12 übermittelten zweiten Geräteschlüssel KEY2-A-LG10 des Traktors 10. Dann, wenn die beiden zweiten Geräteschlüssel KEY2-A-LG10 und KEY2-LG10 übereinstimmen, ist die Authentifizierungsvorrichtung 12 über den Traktor 10 erfolgreich verifiziert worden. In diesem Fall, also bei erfolgreicher Verifizierung der Authentifizierungsvorrichtung 12, ermittelt der Traktor 10 aus dem in der Steuerungseinrichtung desselben gespeicherten ersten, geheimen Geräteschlüssel KEY1-LG10 und der von der Authentifizierungsvorrichtung 12 übermittelten Zufallszahl Z2 einen dritten Geräteschlüssel KEY3-LG10 für den Traktor 10. Der Traktor 10 übermittelt diesen dritten Geräteschlüssel KEY3-LG10 über den Datenbus 13 an die Authentifizierungsvorrichtung 12. Im Block 28 ermittelt die Authentifizierungsvorrichtung 12 aus dem von derselben ermittelten ersten Geräteschlüssel KEY1-A-LG10 und aus der von derselben ermittelten Zufallszahl Z2 ebenfalls einen dritten Geräteschlüssel KEY3-A-LG10 für den Traktor 10. Gemäß einem Block 29 vergleicht die Authentifizierungsvorrichtung 12 die beiden dritten Geräteschlüssel KEY3-A-LG10 und KEY3-LG10. Dann, wenn die beiden dritten Geräteschlüssel übereinstimmen, ist der Traktor 10 über die Authentifizierungsvorrichtung 12 erfolgreich verifiziert worden. Nach erfolgreicher Verifizierung der Authentifizierungsvorrichtung 12 über den Traktor 10 und erfolgreicher Verifizierung des Traktors 10 über die Authentifizierungsvorrichtung 12 ist die Authentifizierung des Traktors erfolgreich abgeschlossen.

Die Authentifizierung der Erntemaschine 11 erfolgt auf analoge Art und Weise: Gemäß dem Block 19 sind in der Erntemaschine 11 eine Identifikationsnummer ID-LG11 der Erntemaschine 11 und eine geheimer erster Geräteschlüssel KEY-LG11 der Erntemaschine 11 gespeichert. Gemäß dem Block 20 ermittelt die Erntemaschine 11 eine Zufallszahl Z1. Die Erntemaschine 11 übermittelt die in derselben gespeicherte Identifikationsnummer ID-LG11 und die von der derselben ermittelte Zufallszahl Z1 über den Datenbus 13 an die Authentifizierungsvorrichtung 12. Der geheime erste Geräteschlüssel KEY-LG11 der Erntemaschine 11 wird nicht übertragen. Gemäß dem Block 21 ermittelt die Authentifizierungsvorrichtung 12 aus der von der Erntemaschine 11 übermittelten Identifikationsnummer ID-LG11 einen ersten Geräteschlüssel KEY1-A-LG11 der Erntemaschine 11, und zwar mit Hilfe eines in der Authentifizierungsvorrichtung 12 implementierten Schlüsselgenerators. Die Authentifizierungsvorrichtung 12 ermittelt gemäß dem Block 22 aus dem ersten Geräteschlüssel KEY1-A-LG11 und der von der Erntemaschine 11 übermittelten Zufallszahl Z1 einen zweiten Geräteschlüssel KEY2-A-LG11 der Erntemaschine 11. Ferner ermittelt die Authentifizierungsvorrichtung 12 eine Zufallszahl Z2. Die Authentifizierungsvorrichtung 12 übermittelt den zweiten Geräteschlüssel KEY2-A-LG11 der Erntemaschine 11 und die von der Authentifizierungsvorrichtung 12 ermittelte Zufallszahl Z2 über den Datenbus 13 an die Erntemaschine 11. Die Erntemaschine 11 ermittelt gemäß dem Block 24 aus dem in derselben gespeicherten ersten, geheimen Geräteschlüssel KEY1-LG11 und der von derselben ermittelten Zufallszahl Z1 ebenfalls einen zweiten Geräteschlüssel KEY2-LG11 der Erntemaschine 11. In einem Block 25 vergleicht die Erntemaschine 11 die von derselben ermittelten zweiten Geräteschlüssel KEY2-LG11 mit dem von der Authentifizierungsvorrichtung 12 übermittelten zweiten Geräteschlüssel KEY2-A-LG11 der Erntemaschine 11. Dann, wenn die beiden zweiten Geräteschlüssel KEY2-A-LG11 und KEY2-LG11 übereinstimmen, ist die Authentifizierungsvorrichtung 12 über die Erntemaschine 11 erfolgreich verifiziert worden. In diesem Fall ermittelt die Erntemaschine 11 aus dem in derselben gespeicherten ersten, geheimen Geräteschlüssel KEY1-LG11 und der von der Authentifizierungsvorrichtung 12 übermittelten Zufallszahl Z2 einen dritten Geräteschlüssel KEY3-LG11. Die Erntemaschine 11 übermittelt diesen dritten Geräteschlüssel KEY3-LGi über den Datenbus 13 an die Authentifizierungsvorrichtung 12. Im Block 28 ermittelt die Authentifizierungsvorrichtung 12 aus dem von derselben ermittelten ersten Geräteschlüssel KEY1-A-LG11 und aus der von derselben ermittelten Zufallszahl Z2 ebenfalls einen dritten Geräteschlüssel KEY3-A-LG11 für die Erntemaschine 11. Gemäß einem Block 29 vergleicht die Authentifizierungsvorrichtung 12 die beiden dritten Geräteschlüssel KEY3-A-LG11 und KEY3-LG11. Dann, wenn die beiden dritten Geräteschlüssel übereinstimmen, ist die Erntemaschine 11 über die Authentifizierungsvorrichtung 12 erfolgreich verifiziert worden. Nach erfolgreicher Verifizierung der Authentifizierungsvorrichtung 12 über die Erntemaschine 11 und nach erfolgreicher Verifizierung der Erntemaschine 11 über die Authentifizierungsvorrichtung 12 ist die Authentifizierung der Erntemaschine 11 erfolgreich abgeschlossen.

Es sei an dieser Stelle darauf hingewiesen, dass der in dem jeweiligen landwirtschaftlichen Gerät 10, 11 gespeicherte, geheime erste Geräteschlüssel KEY1-LGi (i=10, 11) und der in der Authentifizierungsvorrichtung 12 ermittelte, erste Geräteschlüssel KEY1-A-LGi für das jeweilige landwirtschaftliche Gerät 10, 11 mit gleichen Schlüsselgeneratoren ermittelt werden. Der in dem landwirtschaftlichen Gerät 10, 11 gespeicherte, geheime erste Geräteschlüssel KEY1-LGi wird dabei über einen Schlüsselgenerator einer unabhängigen, übergeordneten Datenbank ermittelt. Der ersten Geräteschlüssel KEY1-A-LGi wird in der Authentifizierungsvorrichtung 12 von einem typgleichen Schlüsselgenerator ermittelt, der in der Authentifizierungsvorrichtung 12 implementiert ist. Ferner sei an dieser Stelle darauf hingewiesen, dass zumindest die Ermittlung des zweiten Geräteschlüssels KEY2-A-LGi in Block 22 durch die Authentifizierungsvorrichtung 12 und die Ermittlung des dritten Geräteschlüssels KEY3-LGi in Block 27 durch das jeweilige landwirtschaftliche Gerät 10, 11 mit Hilfe einer nicht-reversibeln Berechnungsmethode erfolgt, z.B. mit einer CRC32-Berechnungsmethode. Hiermit ist dann sichergestellt, dass aus den über den Datenbus 13 übertragenen Geräteschlüsseln KEY2-A-LGi und KEY3-LGi nicht auf den geheimen Geräteschlüssel KEY1-LGi (i=10, 11) des jeweiligen landwirtschaftlichen Geräts 10, 11 zurückgerechnet werden kann. Dies erhöht die Abhörsicherheit des erfindungsgemäßen Verfahrens.

Dann, wenn gemäß Fig. 1 ein mittelbarer Datenaustausch 16, 17 über die Authentifizierungsvorrichtung 12 zwischen Traktor 10 und Erntemaschine 11 erfolgen soll, ist mit erfolgreicher Authentifizierung von Traktor 10 und Erntemaschine 11 nachfolgend automatisch ein Datenaustausch 16, 17 über die Authentifizierungsvorrichtung 12 zwischen dem erfolgreich authentifizierten Traktor 10 und der erfolgreich authentifizierten Erntemaschine 11 möglich.

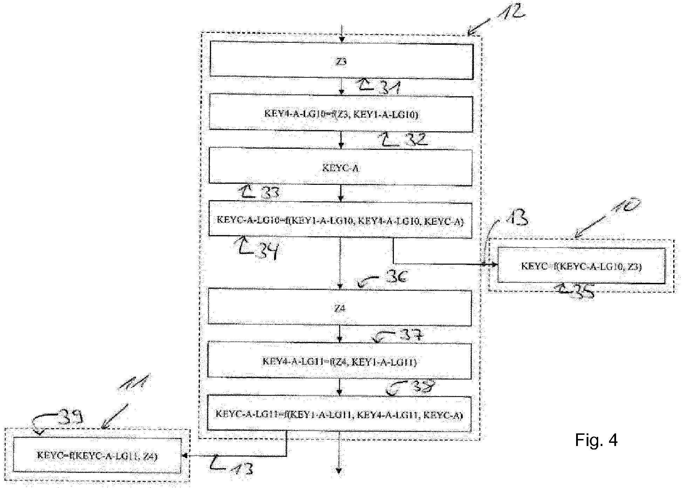

Dann, wenn gemäß Fig. 2 ein unmittelbarer Datenaustausch 18 zwischen Traktor 10 und Erntemaschine 11 unter Umgehung der Authentifizierungsvorrichtung 12 erfolgen soll, ist mit erfolgreicher Authentifizierung von Traktor 10 und Erntemaschine 11 nachfolgend die Ermittlung von Kombinationsschlüsseln erforderlich, die dann zum unmittelbaren Datenaustausch 18 verwendet werden. Hierauf wird nachfolgend unter Bezugnahme auf Fig. 4 im Detail eingegangen.

Gemäß Fig. 4 ermittelt die Authentifizierungsvorrichtung 12 zur Gewährleistung eines unmittelbaren Datenaustauschs 18 zwischen dem vorzugsweise als Traktor ausgebildeten, ersten landwirtschaftlichen Gerät 10 und dem vorzugsweise als Erntemaschine ausgebildeten, zweiten landwirtschaftlichen Gerät 11 aus einer von der Authentifizierungsvorrichtung 12 in einem Block 31 ermittelten weiteren Zufallszahl Z3 und aus dem in Block 21 von der Authentifizierungsvorrichtung 12 für das erste landwirtschaftliche Gerät 10 ermittelten ersten Geräteschlüssel KEY1-A-LG10 gemäß dem Block 32 einen vierten Geräteschlüssel KEY4-A-LG10 für das erste landwirtschaftliche Gerät 10. Die Authentifizierungsvorrichtung 12 ermittelt gemäß Block 33 weiterhin einen geheimen Kombinationsschlüssel KEYC-A, wobei es sich beim geheimen Kombinationsschlüssel KEYC-A insbesondere um eine Zufallszahl handelt. In einem Block 34 ermittelt die Authentifizierungsvorrichtung 12 aus dem ersten in Block 21 ermittelten Geräteschlüssel KEY1-A-LG10, aus dem in Block 32 ermittelten vierten Geräteschlüssel KEY4-A-LG10 und dem in Block 32 ermittelten Kombinationsschlüssel KEYC-A einen Systemschlüssel KEYC-A-LG10 für das erste landwirtschaftliche Gerät 10. Die Authentifizierungsvorrichtung 12 übermittelt diesen Systemschlüssel KEYC-A-LG10 zusammen mit der weiteren Zufallszahl Z3 an das erste landwirtschaftliche Gerät 10, wobei das erste landwirtschaftliche Gerät 10 in einem Block 35 aus dem Systemschlüssel KEYC-A-LG10 und der weiteren Zufallszahl Z3 den Kombinationsschlüssel KEYC ermittelt. Dabei kann aus dem von der Authentifizierungsvorrichtung 12 übermittelten Systemschlüssel KEYC-A-LG10 und der weiteren Zufallszahl Z3 zwar auf den Kombinationsschlüssel KEYC aber nicht auf den geheimen ersten Geräteschlüssel KEY1-LG10 zurückgerechnet werden. Das erste landwirtschaftliche Gerät 10 speichert den Kombinationsschlüssel KEYC und verwendet denselben für einen nachfolgenden, verschlüsselten Datenaustausch mit dem zweiten landwirtschaftlichen Gerät 11.

Wie Fig. 4 weiterhin entnommen werden kann, ermittelt die Authentifizierungsvorrichtung 12 ferner in einem Block 37 aus einer von derselben in einem Block 36 ermittelten weiteren Zufallszahl Z4 und aus dem von derselben für das zweite landwirtschaftliche Gerät 11 in Block 21 ermittelten ersten Geräteschlüssel KEY1-A-LG11 einen vierten Geräteschlüssel KEY4-A-LG11 für das zweite landwirtschaftliche Gerät 11. Gemäß einem Block 38 ermittelt die Authentifizierungsvorrichtung 12 ferner aus der aus dem in Block 21 ermittelten ersten Geräteschlüssel KEY1-A-LG11, aus dem in Block 37 ermittelten vierten Geräteschlüssel KEY4-A-LG11 und dem in Block 33 ermittelten Kombinationsschlüssel KEYC-A einen Systemschlüssel KEYC-A-LG11 für das zweite landwirtschaftliche Gerät 11. Die Authentifizierungsvorrichtung 12 übermittelt den Systemschlüssel KEYC-A-LG11 zusammen mit der der weiteren Zufallszahl Z4 an das zweite landwirtschaftliche Gerät 11, wobei das zweite landwirtschaftliche Gerät 11 in einem Block 39 aus dem Systemschlüssel KEYC-A-LG11 und der weiteren Zufallszahl Z4 den Kombinationsschlüssel KEYC ermittelt. Dabei kann aus dem von der Authentifizierungsvorrichtung 12 übermittelten Systemschlüssel KEYC-A-LG11 und der weiteren Zufallszahl Z4 zwar auf den Kombinationsschlüssel KEYC aber nicht auf den geheimen ersten Geräteschlüssel KEY1-LG11 des zweiten landwirtschaftlichen Geräts 11 zurückgerechnet werden. Das zweite landwirtschaftliche Gerät 11 speichert den Kombinationsschlüssel KEYC und verwendet denselben für einen nachfolgenden, verschlüsselten Datenaustausch mit dem ersten landwirtschaftlichen Gerät 10.

Ein nachfolgender, unmittelbarer und verschlüsselter Datenaustausch zwischen den beiden landwirtschaftlichen Geräten 10, 11 erfolgt unter Verwendung des Kombinationsschlüssels KEYC.

Die erfindungsgemäße Authentifizierungsvorrichtung 12 umfasst Mittel zur Durchführung des erfindungsgemäßen Verfahrens, zumindest Mittel zur Authentifizierung im Sinne der Blöcke 19 bis 30 und bei einem unmittelbaren Datenaustauschs 18 zwischen den authentifizierten, landwirtschaftlichen Geräten 10, 11 ferner Mittel zur Durchführung der Blöcke 31 bis 39. Bei den Mitteln handelt es sich um mindestens eine Schnittstelle zum Datenaustausch mit den landwirtschaftlichen Geräten 10 und 11, um einen Speicher zur Speicherung der entsprechenden Daten und um einen Prozessor zur Ermittlung der entsprechenden Daten.

Die Authentifizierungsvorrichtung 12 kann als eigenständige Baugruppe ausgebildet oder in die Steuerungseinrichtungen der landwirtschaftlichen Geräten 10 und 11 integriert sein. So ist es z.B. möglich, dass die Authentifizierungsvorrichtung 12 von einem USB-Stick gebildet ist, der über eine USB-Schnittstelle eines der landwirtschaftlichen Geräte 10, 11 an den Datenbus 13 koppelbar ist.

Bei allen beschriebenen Ausführungsformen wird vorzugsweise als Datenbus ein sogenannter ISOBUS vorgesehen. Dieser ist als CAN-Bus nach ISO 11783 genormt und regelt die Kommunikation zwischen landwirtschaftlichen Geräten, insbesondere auch die Kommunikation zwischen landwirtschaftlichen Geräten verschiedener Hersteller.

### Bezugszeichenliste

- 10: landwirtschaftliches Gerät
- 11: landwirtschaftliches Gerät
- 12: Authentifizierungsvorrichtung
- 13: Datenbus
- 14: Authentifizierung
- 15: Authentifizierung
- 16: mittelbarer Datenaustausch
- 17: mittelbarer Datenaustausch
- 18: unmittelbarer Datenaustausch
- 19: Block
- 20: Block
- 21: Block
- 22: Block
- 23: Block
- 24: Block
- 25: Block
- 26: Block
- 27: Block
- 28: Block
- 29: Block
- 30: Block
- 31: Block
- 32: Block
- 33: Block
- 34: Block
- 35: Block
- 36: Block
- 37: Block
- 38: Block
- 39: Block

## Patentansprüche

1. Verfahren zur Authentifizierung von mindestens zwei landwirtschaftlichen Geräten (10, 11), wobei eines der landwirtschaftlichen Geräte (10,11) ein Traktor (10) ist,
**dadurch gekennzeichnet, dass**
ein weiteres der landwirtschaftlichen Geräte (10,11) eine Erntemaschine (11) ist, wobei die landwirtschaftlichen Geräte (10,11) über einen Datenbus (13) gekoppelt sind, und wobei das Verfahren die Schritte umfasst, dass
jedes der an den Datenbus (13) gekoppelten, landwirtschaftlichen Geräte (10, 11) über eine ebenfalls an den Datenbus (13) gekoppelte Authentifizierungsvorrichtung (12) automatisch und unabhängig von dem oder jedem anderen landwirtschaftlichen Gerät (10, 11) einer Authentifizierung (14, 15) unterzogen wird; anschließend ein unmittelbarer Datenaustausch (18) oder mittelbarer Datenaustausch (16,17) zwischen den erfolgreich authentifizierten, landwirtschaftlichen Geräten (10, 11) automatisch zugelassen wird,
wohingegen ein Datenaustausch mit einem nicht erfolgreich authentifizierten, landwirtschaftlichen Gerät (10, 11) nicht zugelassen wird,
und
wobei die Authentifizierungsvorrichtung (12) einem der landwirtschaftlichen Geräte (10,11) zugeordnet ist.

2. Verfahren nach Anspruch 1, **dadurch gekennzeichnet, dass** zur Authentifizierung (14, 15) jedes an den Datenbus (13) gekoppelten, landwirtschaftlichen Geräts (10, 11) einerseits über das jeweilige landwirtschaftliche Gerät (10, 11) die Authentifizierungsvorrichtung (12) und andererseits über die Authentifizierungsvorrichtung (12) das jeweilige landwirtschaftliche Gerät (10, 11) verifiziert wird.

3. Verfahren nach Anspruch 2, **dadurch gekennzeichnet, dass** zur Verifikation der Authentifizierungsvorrichtung (12) über das jeweilige landwirtschaftliche Gerät (10, 11)
das jeweilige landwirtschaftliche Gerät (10, 11) eine in einer Steuerungseinrichtung desselben gespeicherte Identifikationsnummer (ID-LGi) und eine von der Steuerungseinrichtung desselben ermittelte Zufallszahl (Z1) an die Authentifizierungsvorrichtung (12) übermittelt;
die Authentifizierungsvorrichtung (12) aus der von dem jeweiligen landwirtschaftlichen Gerät übermittelten Identifikationsnummer (ID-LGi) einen ersten Geräteschlüssel (KEY1-A-LGi) ermittelt;
die Authentifizierungsvorrichtung (12) aus dem ersten Geräteschlüssel (KEY1-A-LGi) und der von dem jeweiligen landwirtschaftlichen Gerät (10, 11) übermittelten Zufallszahl (Z1) einen zweiten Geräteschlüssel (KEY2-A-LGi) ermittelt;
die Authentifizierungsvorrichtung (12) den zweiten Geräteschlüssel (KEY2-A-LGi) und eine von der Authentifizierungsvorrichtung (12) ermittelte Zufallszahl (Z2) an die Steuerungseinrichtung des jeweiligen landwirtschaftlichen Geräts (10, 11) übermittelt;
das jeweilige landwirtschaftliche Gerät (10, 11) aus einem in der Steuerungseinrichtung desselben gespeicherten ersten Geräteschlüssel (KEY1-LGi) und der von derselben ermittelten Zufallszahl (Z1) ebenfalls einen zweiten Geräteschlüssel (KEY2-LGi) ermittelt und diesen von derselben ermittelten zweiten Geräteschlüssel (KEY2-LGi) mit dem von der Authentifizierungsvorrichtung ermittelten und übermittelten zweiten Geräteschlüssel (KEY2-A-LGi) vergleicht.

4. Verfahren nach Anspruch 3, **dadurch gekennzeichnet, dass** zur Verifikation des jeweiligen landwirtschaftlichen Geräts (10, 11) über die Authentifizierungsvorrichtung (12)
das jeweilige landwirtschaftliche Gerät (10, 11) aus dem in der Steuerungseinrichtung desselben gespeicherten ersten Geräteschlüssel (KEY1-LGi) und der von der Authentifizierungsvorrichtung (12) übermittelten Zufallszahl (Z2) einen dritten Geräteschlüssel (KEY3-LGi) ermittelt und denselben an die Authentifizierungsvorrichtung (12) übermittelt;
die Authentifizierungsvorrichtung (12) aus dem von derselben ermittelten ersten Geräteschlüssel (KEY1-A) und aus der von derselben ermittelten Zufallszahl (Z2) ebenfalls einen dritten Geräteschlüssel (KEY3-A-LGi) ermittelt und diesen mit dem vom jeweiligen landwirtschaftlichen Gerät (10, 11) ermittelten und übermittelten dritten Geräteschlüssel (KEY3-LGi) vergleicht.

5. Verfahren nach einem der Ansprüche 3 und 4, **dadurch gekennzeichnet, dass** nach erfolgreicher Verifikation der Authentifizierungsvorrichtung (12) und des jeweiligen landwirtschaftlichen Geräts (10, 11) das jeweilige landwirtschaftliche Gerät (10, 11) erfolgreich authentifiziert ist.

6. Verfahren nach einem der Ansprüche 1 bis 5, **dadurch gekennzeichnet, dass** ein mittelbarer Datenaustausch (16, 17) zwischen erfolgreich authentifizierten, landwirtschaftlichen Geräten (10, 11) über die Authentifizierungsvorrichtung (12) durchgeführt wird.

7. Verfahren nach einem der Ansprüche 1 bis 5, **dadurch gekennzeichnet, dass** ein unmittelbarer Datenaustausch (18) zwischen erfolgreich authentifizierten, landwirtschaftlichen Geräten (10, 11) unter Umgehung der Authentifizierungsvorrichtung (12) durchgeführt wird.

8. Verfahren nach Anspruch 7, **dadurch gekennzeichnet, dass** hierzu
die Authentifizierungsvorrichtung (12) aus einer von derselben ermittelten weiteren Zufallszahl (Z3) und aus einem von derselben für ein erstes landwirtschaftliches Gerät (10) ermittelten ersten Geräteschlüssel (KEY1-A-LG10) einen vierten Geräteschlüssel (KEY4-A-LG10) für das erste landwirtschaftliche Gerät (10) ermittelt, wobei die Authentifizierungsvorrichtung (12) weiterhin einen Kombinationsschlüssel (KEYC-A) ermittelt, wobei die Authentifizierungsvorrichtung (12) ferner aus der aus dem ersten Geräteschlüssel (KEY1-A-LG10), aus dem vierten Geräteschlüssel (KEY4-A-LG10) und dem Kombinationsschlüssel (KEYC-A) einen Systemschlüssel (KEYC-A-LG10) für das erste landwirtschaftliche Gerät (10) ermittelt und denselben zusammen mit der der weiteren Zufallszahl (Z3) an das erste landwirtschaftliche Gerät (10) übermittelt, und wobei das erste landwirtschaftliche Gerät aus dem Systemschlüssel (KEYC-A-LG10) und der weiteren Zufallszahl (Z3) den Kombinationsschlüssel (KEYC) ermittelt;
die Authentifizierungsvorrichtung (12) aus einer von derselben ermittelten weiteren Zufallszahl (Z4) und aus einem von derselben für ein zweites landwirtschaftliches Gerät (11) ermittelten ersten Geräteschlüssel (KEY1-A-LG11) einen vierten Geräteschlüssel (KEY4-A-LG11) für das zweite landwirtschaftliche Gerät (11) ermittelt, wobei die Authentifizierungsvorrichtung (12) ferner aus dem ersten Geräteschlüssel (KEY1-A-LG11), aus dem vierten Geräteschlüssel (KEY4-A-LG11) und dem Kombinationsschlüssel (KEYC-A) einen Systemschlüssel (KEYC-A-LG11) für das zweite landwirtschaftliche Gerät (11) ermittelt und denselben zusammen mit der der weiteren Zufallszahl (Z4) an das zweite landwirtschaftliche Gerät (11) übermittelt, und wobei das zweite landwirtschaftliche Gerät aus dem Systemschlüssel (KEYC-A-LG11) und der weiteren Zufallszahl (Z4) den Kombinationsschlüssel (KEYC) ermittelt;
das erste landwirtschaftliche Gerät (10) und das zweite landwirtschaftliche Gerät (11) die von denselben ermittelten Kombinationsschlüssel (KEYC) zum verschlüsselten, unmittelbaren Datenaustausch verwenden.

9. Authentifizierungsvorrichtung (12) zur Authentifizierung von mindestens zwei landwirtschaftlichen Geräten (10, 11), wobei eines der landwirtschaftlichen Geräte (10, 11) ein Traktor (10) ist,
**dadurch gekennzeichnet dass**,
ein weiteres der landwirtschaftlichen Geräte (10, 11) eine Erntemaschine (11) ist, wobei die landwirtschaftlichen Geräte (10, 11) über einen Datenbus (13) gekoppelt sind,
und wobei die Authentifizierungsvorrichtung (12) Mittel zur Durchführung des Verfahrens nach einem oder mehreren der Ansprüche 1 bis 8 aufweist.

## Claims

1. A method of authenticating at least two agricultural devices (10, 11), wherein one of the agricultural devices (10, 11) is a tractor,
**characterised in that**
a further one of the agricultural devices (10, 11) is a harvester (11), wherein the agricultural devices (10, 11) are coupled by way of a data bus (13) and wherein the method includes the steps:
each of the agricultural devices (10, 11) coupled to the data bus (13) is subjected to authentication (14, 15) by way of an authentication device (12) also coupled to the data bus (13) automatically and independently of the or each other agricultural device (10, 11);
then direct data exchange (18) or indirect data exchange (16, 17) is automatically permitted between the successfully authenticated agricultural devices (10, 11),
whereas a data exchange is not permitted with an unsuccessfully authenticated agricultural device (10, 11),
and
wherein the authentication device (12) is associated with one of the agricultural devices (10, 11).

2. A method according to claim 1 **characterised in that** for authentication (14, 15) of each agricultural device (10, 11) coupled to the data bus (13) on the one hand the authentication device (12) is verified by way of the respective agricultural device (10, 11) and on the other hand the respective agricultural device (10, 11) is verified by way of the authentication device (12).

3. A method according to claim 2 **characterised in that** for verification of the authentication device (12) by way of the respective agricultural device (10, 11),
the respective agricultural device (10, 11) transmits an identification number (ID-LGi) stored in a control device thereof and a random number (Z1) determined by the control device thereof to the authentication device (12);
the authentication device (12) determines a first device key (KEY1-A-LGi) from the identification number (ID-LGi) transmitted by the respective agricultural device;
the authentication device (12) determines a second device key (KEY2-A-LGi) from the first device key (KEY1-A-LGi) and the random number (Z1) transmitted by the respective agricultural device (10, 11);
the authentication device (12) transmits the second device key (KEY2-A-LGi) and a random number (Z2) determined by the authentication device (12) to the control device of the respective agricultural device (10, 11); and
the respective agricultural device (10, 11) also determines a second device key (KEY2-LGi) from a first device key (KEY1-LGi) stored in the control device thereof and the random number (Z1) determined by same and compares said second device key (KEY2-LGi) determined by same to the device key (KEY2-A-LGi) determined by and transmitted by the authentication device.

4. A method according to claim 3 **characterised in that** for verification of the respective agricultural device (10, 11) by way of the authentication device (12)
the respective agricultural device (10, 11) determines a third device key (KEY3-LGi) from the first device key (KEY1-LGi) stored in the control device thereof and the random number (Z2) transmitted by the authentication device (12) and transmits same to the authentication device (12); and
the authentication device (12) also determines a third device key (KEY3-A-LGi) from the first device key (KEY1-A) determined by same and from the random number (Z2) determined by same and compares same to the third device key (KEY3-LGi) determined by the respective agricultural device (10, 11) and transmitted thereby.

5. A method according to one of claims 3 and 4 **characterised in that** after successful verification of the authentication device (12) and the respective agricultural device (10, 11) the respective agricultural device (10, 11) is successfully authenticated.

6. A method according to one of claims 1 to 5 **characterised in that** indirect data exchange (16, 17) is implemented between successfully authenticated agricultural devices (10, 11) by way of the authentication device (12).

7. A method according to one of claims 1 to 5 **characterised in that** indirect data exchange (18) is implemented between successfully authenticated agricultural devices (10, 11) while bypassing the authentication device (12).

8. A method according to claim 7 **characterised in that** for that purpose
the authentication device (12) determines a fourth device key (KEY4-A-LG10) for the first agricultural device (10) from a further random number (Z3) determined by the authentication device and from a first device key (KEY1-A-LG10) determined by the authentication device for a first agricultural device (10), wherein the authentication device (12) further determines a combination key (KEYC-A), wherein the authentication device (12) further determines a system key (KEYC-A-LG10) for the first agricultural device (10) from the first device key (KEY1-A-LG10), from the fourth device key (KEY4-A-LG10) and the combination key (KEYC-A) and transmits same together with the further random number (Z3) to the first agricultural device (10), and wherein the first agricultural device determines the combination key (KEYC) from the system key (KEYC-A-LG10) and the further random number (Z3);
the authentication device (12) determines a fourth device key (KEY4-A-LG11) for the second agricultural device (11) from a further random number (Z4) determined by the authentication device (12) and from a first device key (KEY1-A-LG11) determined by same for a second agricultural device (11), wherein the authentication device (12) further determines a system key (KEYC-A-LG11) for the second agricultural device (11) from the first device key (KEY1-A-LG11), from the fourth device key (KEY4-A-LG11) and the combination key (KEYC-A) and transmits same together with the further random number (Z4) to the second agricultural device (11), and wherein the second agricultural device determines the combination key (KEYC) from the system key (KEYC-A-LG11) and the further random number (Z4); and
the first agricultural device (10) and the second agricultural device (11) use the combination key (KEYC) determined by same for encrypted direct data exchange.

9. An authentication device (12) for the authentication of at least two agricultural devices (10, 11), wherein one of the agricultural devices (10, 11) is a tractor (10),
**characterised in that**
a further one of the agricultural devices (10, 11) is a harvester (11), wherein the agricultural devices (10, 11) are coupled by way of a data bus (13),
and wherein the authentication device (12) has means for carrying out the method according to one or more of claims 1 to 8.

## Revendications

1. Procédé d'authentification d'au moins deux engins agricoles (10, 11), un des engins agricoles (10, 11) étant un tracteur (10), **caractérisé en ce qu'**un autre des engins agricoles (10, 11) est une machine de récolte (11), les engins agricoles (10, 11) étant couplés par l'intermédiaire d'un bus de données (13), et le procédé comprenant les étapes consistant **en ce que** chacun des engins agricoles (10, 11) couplés au bus de données (13) est soumis, automatiquement et indépendamment du ou de chaque autre engin agricole (10, 11), à une authentification (14, 15) par l'intermédiaire d'un dispositif d'authentification (12) également couplé au bus de données (13) ; **en ce qu'**ensuite un échange de données direct (18) ou un échange de données indirect (16, 17) est automatiquement autorisé entre les engins agricoles (10, 11) authentifiés avec succès, mais un échange de données avec un engin agricole (10, 11) non authentifié avec succès n'est pas autorisé, et le dispositif d'authentification (12) est associé à un des engins agricoles (10, 11).

2. Procédé selon la revendication 1, **caractérisé en ce que**, pour l'authentification (14, 15) de chaque engin agricole (10, 11) couplé au bus de données (13), d'une part le dispositif d'authentification (12) est vérifié par l'intermédiaire de l'engin agricole (10, 11) correspondant et, d'autre part, l'engin agricole (10, 11) correspondant est vérifié par l'intermédiaire du dispositif d'authentification (12).

3. Procédé selon la revendication 2, **caractérisé en ce que**, pour la vérification du dispositif d'authentification (12) par l'intermédiaire de l'engin agricole (10, 11) correspondant, l'engin agricole (10, 11) correspondant transmet au dispositif d'authentification (12) un numéro d'identification (ID-LGi) mémorisé dans un équipement de commande dudit engin agricole et un nombre aléatoire (Z1) déterminé par l'équipement de commande dudit engin agricole ; le dispositif d'authentification (12) détermine, à partir du numéro d'identification (ID-LGi) transmis par l'engin agricole correspondant, un premier code d'engin (KEY1-A-LGi) ; le dispositif d'authentification (12) détermine, à partir du premier code d'engin (KEY1-A-LGi) et du nombre aléatoire (Z1) transmis par l'engin agricole (10, 11) correspondant, un deuxième code d'engin (KEY2-A-LGi) ; le dispositif d'authentification (12) transmet le deuxième code d'engin (KEY2-A-LGi) et un nombre aléatoire (Z2) déterminé par le dispositif d'authentification (12) à l'équipement de commande de l'engin agricole (10, 11) correspondant ; l'engin agricole (10, 11) correspondant détermine également, à partir d'un premier code d'engin (KEY1-LGi) mémorisé dans l'équipement de commande de celui-ci et du nombre aléatoire (Z1) déterminé par ledit équipement de commande, un deuxième code d'engin (KEY2-LGi) et compare ce deuxième code d'engin (KEY2-LGi), déterminé par ledit équipement de commande, au deuxième code d'engin (KEY2-A-LGi) déterminé et transmis par le dispositif d'authentification.

4. Procédé selon la revendication 3, **caractérisé en ce que**, pour la vérification de l'engin agricole (10, 11) correspondant par l'intermédiaire du dispositif d'authentification (12), l'engin agricole (10, 11) correspondant détermine, à partir du premier code d'engin (KEY1-LGi) mémorisé dans l'équipement de commande dudit engin agricole et du nombre aléatoire (Z2) transmis par le dispositif d'authentification (12), un troisième code d'engin (KEY3-LGi) et le transmet au dispositif d'authentification (12) ; le dispositif d'authentification (12) détermine également, à partir du premier code d'engin (KEY1-A) déterminé par celui-ci et à partir du nombre aléatoire (Z2) déterminé par celui-ci, un troisième code d'engin (KEY3-A-LGi) et le compare avec le troisième code d'engin (KEY3-LGi) déterminé et transmis par l'engin agricole (10, 11) correspondant.

5. Procédé selon une des revendications 3 et 4, **caractérisé en ce que**, après vérification réussie du dispositif d'authentification (12) et de l'engin agricole (10, 11) correspondant, l'engin agricole (10, 11) correspondant est authentifié avec succès.

6. Procédé selon une des revendications 1 à 5, **caractérisé en ce qu'**un échange de données indirect (16, 17) est réalisé entre engins agricoles (10) authentifiés avec succès par l'intermédiaire du dispositif d'authentification (12).

7. Procédé selon une des revendications 1 à 5, **caractérisé en ce qu'**un échange de données direct (18) est réalisé entre engins agricoles (10, 11) authentifiés avec succès en contournant le dispositif d'authentification (12).

8. Procédé selon la revendication 7, **caractérisé en ce que**, à cet effet, le dispositif d'authentification (12) détermine, à partir d'un autre nombre aléatoire (Z3) déterminé par celui-ci et à partir d'un premier code d'engin (KEY1-A-LG10) déterminé par celui-ci pour un premier engin agricole (10), un quatrième code d'engin (KEY4-A-LG10) pour le premier engin agricole (10), le dispositif d'authentification (12) déterminant en outre un code de combinaison (KEYC-A), le dispositif d'authentification (12) déterminant en plus, à partir du premier code d'engin (KEY1-A-LG10), à partir du quatrième code d'engin (KEY4-A-LG10) et du code de combinaison (KEYC-A), un code de système (KEYC-A-LG10) pour le premier engin agricole (10) et le transmettant avec l'autre nombre aléatoire (Z3) au premier engin agricole (10), et le premier engin agricole déterminant à partir du code de système (KEYC-A-LG10) et de l'autre nombre aléatoire (Z3), le code de combinaison (KEYC) ; le dispositif d'authentification (12) déterminant à partir d'un autre nombre aléatoire (Z4) déterminé par celui-ci et à partir d'un premier code d'engin (KEY1-A-LG11) déterminé par celui-ci pour un second engin agricole (11), un quatrième code d'engin (KEY4-A-LG11) pour le second engin agricole (11), le dispositif d'authentification (12) déterminant également à partir du premier code d'engin (KEY1-A-LG11), à partir du quatrième code d'engin (KEY4-A-LG11) et du code de combinaison (KEYC-A), un code de système (KEYC-A-LG11) pour le second engin agricole (11) et le transmettant avec l'autre nombre aléatoire (Z4), au second engin agricole (11), et le second engin agricole déterminant à partir du code de système (KEYC-A-LG11) et l'autre nombre aléatoire (Z4), le code de combinaison (KEYC) ; le premier engin agricole (10) et le second engin agricole (11) utilisant les codes (KEYC) utilisés par ceux-ci pour l'échange de données codé direct.

9. Dispositif d'authentification (12) pour l'authentification d'au moins deux engins agricoles (10, 11), un des engins agricoles (10, 11) étant un tracteur (10), **caractérisé en ce qu'**un autre des engins agricoles (10, 11) est une machine de récolte (11), les engins agricoles (10, 11) étant couplés par l'intermédiaire d'un bus de données (13), et le dispositif d'authentification (12) comportant des moyens pour réaliser le procédé selon une ou plusieurs des revendications 1 à 8.
